Europäisches Patentamt

(19) European Patent Office

Office européen des brevets

(11) Publication number: **0 139 089**
**A2**

## (12) EUROPEAN PATENT APPLICATION

(21) Application number: **84107412.3**

(22) Date of filing: **27.06.84**

(51) Int. Cl.⁴: **B 29 C 39/00**

(30) Priority: **28.06.83 US 508715**

(43) Date of publication of application:
**02.05.85 Bulletin 85/18**

(84) Designated Contracting States:
**AT BE CH DE FR GB IT LI NL SE**

(71) Applicant: **UNION CARBIDE CORPORATION**
**Old Ridgebury Road**
**Danbury Connecticut 06817(US)**

(72) Inventor: **Lucchesi, Peter Joseph**
**514 Hancock Street**
**Middlesex New Jersey, 08846(US)**

(74) Representative: **Schmied-Kowarzik, Volker, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Siegfriedstrasse 8**
**D-8000 München 40(DE)**

(54) **Process for reducing vedge waver during formation of film from lldpe resins.**

(57) A process for reducing edge waver during slot cast extrusion of a molten film formed from a linear low density polyethylene film forming composition wherein small amounts of high pressure low density polyethylene is incorporated in the composition and the film is extruded at a draw span of about three to eight inches while directing a fluid medium against the edges of the molten film.

FIG. 1

Croydon Printing Company Ltd.

EP 0 139 089 A2

- 1 -

## PROCESS FOR REDUCING
## EDGE WAVER DURING FORMATION OF FILM
## FROM LLDPE RESINS

This invention relates to a process for reducing edge waver during formation of LLDPE film by the slot-cast film forming process.

### Definitions

Edge Waver - Edge waver is defined as a periodic or random variation of the web width. It is caused by lack of proper web width control.

Draw Span - Draw span is the distance between the die exit and the contact point of the molten web on the casting roll.

By draw-down is meant the stretching of an extruded web or film in the direction of flow and sometimes also in the transverse direction.

By "draw ratio" is meant the film or coating velocity after the rapid cooling zone or station divided by the extrudate velocity emerging from a die. This can be approximated by using the inverse of thicknesses which can be expressed as

$$R = \left( \frac{1}{t_f} \right) \left( \frac{1}{t_o} \right)$$

wherein $t_f$ is the thickness of film;

$t_o$ is the thickness of film extrudate in the die R is the draw ratio

D-13968

- 2 -

Certain polymeric resins and particularly polyolefin resins are not entirely satisfactory for commercial operations involving slot cast film formation. This has been primarily attributed to the phenomenon of edge waver in the film.

Normally, the onset of edge waver with certain polymeric resins requires an extrusion die, a rapid cooling zone and usually requires high draw-down and line speeds. Edge waver for certain resins occurs at characteristic draw ratios, often in the range of 20 to 1. In slot cast film applications, edge waver can occur with certain resins because die gaps are usually 20-40 mils and the thickness of the drawn down final film is usually equal to or less than 1 mil. Thus, the draw ratio may be in excess of the critical draw ratio of certain resins.

In addition, draw-down occurs at line speeds in excess of about 500 ft/minute.

One possible method for reducing edge waver is to lower the draw ratio which is approximately equal to the ratio of the die gap to the film thickness. However, at the high takeoff speeds (equal to or greater than 500 FPM) and thin gauges (equal to or less than 1 mil) encountered in the slot cast film process, it is not commercially feasible to reduce the die gap, thereby lowering the draw ratio, because of constraints of head pressure and melt fracture. It has presently been proposed to overcome edge waver with difficult processing polymeric materials particularly polyolefins such as

D-13968

linear low density polyolefins (LLDPE), by using mixtures of LLDPE with high percentages of easier processing resins such as disclosed in U.S. Patent 4,315,976. Unfortunately, however, in addition to higher raw material costs, the final product does not have the inherent property advantages achieved by using the LLDPE alone.

In accordance with the present invention there is provided a process for reducing edge waver during slot cast extrusion of a molten film formed from an LLDPE film forming composition, said molten film being susceptible to edge waver under conditions which would cause edge waver by extruding the molten film from a die and rapidly cooling said molten film in a rapid cooling zone, which comprises (a) incorporating in said LLDPE film forming composition from about 3 to 12% by weight of high pressure low density polyethylene (HPLDPE); (b) extruding said film from said die to said rapid cooling zone at a draw span of about 3 to 8 inches; and (c) directing a fluid medium against the edges of said molten film between said die and said rapid cooling zone at a velocity and in an amount sufficient to reduce edge waver in said molten film.

The preferred amount of high pressure low density polyethylene to be incorporated in the LLDPE film forming composition is from about 4% to about 9% by weight and most preferably from about 5% to about 7% by weight.

In addition, the preferred draw span is from about 5 to about 7 inches.

D-13968

Fig. 1 is a schematic representation of the process of the invention showing an extruder, a die, a molten film exiting the die, a rapid cooling zone or station, an air knife and edge pinners disposed between the die and rapid cooling station.

Fig. 2 is a schematic side view of the edge pinner in position with respect to the molten web, the air knife and casting roll.

Fig. 3 is a front view of the arrangement shown in Fig. 2.

Linear, low density ethylene hydrocarbon copolymers (LLDPE) heretofore have not been satisfactorily used commercially for slot cast film extrusion.

Applicant has found that there are deficiencies associated with the use of LLDPE resins which include the phenomenon known as edge waver. Edge waver leads to web width non-uniformity and in some cases, melt breakage. Edge waver, in these cases, occurs at line speeds that are exceptionally low, i.e., the amount of drawdown that could be done is not adequate for proper fabrication. When unmodified, linear, low density ethylene hydrocarbon copolymer is used for slot cast extrusion, maximum line speeds are found to be less than 500 ft/min. In most commercial slot-cast operations, line speeds greater than 500 ft/min are sought.

Low Density Polyethylene:  Rheology

The rheology of polymeric materials depends to a large extent on molecular weight and molecular weight distribution. Studies of high pressure low density polyethylene have also shown the importance of long chain branching. In slot cast extrusion, two aspects of rheological behavior are important: shear and extension. Within a film extruder and extrusion die, a polymeric melt undergoes severe shearing deformation. As the extrusion screw pumps the melt to and through an extrusion coating die, the melt experiences a wide range of shear rates. Most film extrusion processes are thought to expose the melt to shear at rates in the 50-2000 sec.$^{-1}$ range.

Polymeric melts are known to exhibit what is commonly termed shear thinning behavior, i.e., non-Newtonian flow behavior. As shear rate is increased, viscosity (the ratio of shear stress, $\tau$, to shear rate, $\lambda$) decreases. The degree of viscosity decrease depends upon the molecular weight, its distribution and molecular configuration, i.e. long chain branching of the polymeric material. Short chain branching has little effect on shear viscosity. In general, broad molecular weight distribution resins show enhanced shear thinning behaviour in the shear rate range common to extrusion in extrusion coating. Long chain branching can also enhance this behaviour. Narrow molecular weight distribution resins exhibit reduced shear thinning behavior at extrusion shear rates.

The consequences of the aforementioned differences in the effect of molecular structure on shear thinning are that narrow distribution resins (such as linear, low pressure, ethylene hydrocarbon copolymers) require higher power and develop higher pressures during extrusion than broad molecular weight distribution resins (such as high pressure, low density polyethylenes) of equivalent melt index (ASTM D-1238). In order to compensate for high die pressures, it is often necessary to run with relatively large die gap openings, e.g., greater than 20 mils. Such die gap openings require a high drawdown, usually greater than 20 to 1.

The rheology of polymeric materials is customarily studied in shear deformation. In shear, the velocity gradient of the deforming resin is perpendicular to the flow direction. This mode of deformation is experimentally convenient but does not convey the essential information for understanding material response in the slot cast extrusion coating process. As one can define a shear viscosity in terms of shear stress and shear rate, i.e.,:

$$\eta \text{ shear} = \tau_{12}/\lambda$$

where

$\eta$ shear = shear viscosity (poise)

$\tau_{12}$ = shear stress (dynes/cm$^2$)

$\lambda$ = shear rate (sec$^{-1}$)

an extensional viscosity can be defined in terms of normal stress and strain rate, i.e.,:

$$\eta \text{ ext} = \pi/\varepsilon$$

$\eta$ ext = extensional viscosity (poise)

$\pi$ = normal stress (dynes/cm$^2$)

$\varepsilon$ = strain rate (sec$^{-1}$)

In pure extensional flow, unlike shear flow, the velocity gradient is parallel to the flow direction. Commercial extrusion processes involve both shear and extensional deformations. In slot cast extrusion, as well as in blown film extrusion the extensional rheology characteristics of a resin are exceedingly important. They may, in fact, dominate the process.

Extensional viscosity can be measured by a number of experimental techniques (see, for example, J.M. Dealy, Rheometers for Molten Plastics, Van Nostrand, Reinhold Company, New York, 1982). The procedure used herein is a constant strain rate method. Briefly, the method uses a servo-controlled Instron tensile testing machine. The ends of a molten ring of polymer, immersed in a silicone oil bath, are separated at an accelerating rate according to the following relationship.

$$L(t) = L_o \exp (\varepsilon t) \qquad (3)$$

where
$L(t)$ = jaw separation at time t (cm)

$L_o$ = initial jaw separation (cm)

$\varepsilon$ = strain rate (sec$^{-1}$), a constant

t = time (sec)

A force transducer measures load during the deformation. Extensional viscosity is calculated by dividing stress by strain rate and is determined as a function of displacement or time during the deformation at a constant temperature of 150°C.

When certain high pressure, low density polyethylene melts such as slot cast grades are deformed according to equation (3), extensional viscosity is observed to increase at an accelerating rate with log time. The melt is said to strain harden. This strain hardening intensifies as the strain rate is increased. In some cases, the melt appears to exhibit unbounded stress growth.

Transition metal catalyzed, ethylene hydrocarbon copolymers do not, in general, show accelerating stress growth. Certain broad molecular weight distribution resins do strain harden, but their extensional viscosity (log $\eta_{ext}$) seems to increase linearly with log time. Certain narrow molecular weight distribution resins, such as those which are herein described, show little strain hardening when strain rates are low.

High pressure, low density polyethylene can be considered "soft" in shear and "stiff" in extension when compared to linear ethylene hydrocarbon copolymers of narrow molecular weight distribution. Ethylene hydrocarbon copolymers having a narrow molecular weight distribution exhibit the opposite rheology. They are "stiff" in shear and "soft" in extension. The terms "soft" and "stiff", as used herein, refer to the relative magnitude of shear and extensional viscosity when comparing the rheology of high pressure, low density polyethylene and linear ethylene hydrocarbon copolymers of narrow molecular weight distribution.

The consequences of the differences in strain hardening in the extensional viscosity characteristics are as follows. Certain high pressure, low density polyethylene resins tend to build up stresses at high slot cast extrusion rates and drawdown in slot cast extrusion process. When these "high pressure" resins reach a point where the

D-13968

stress exceeds the melt strength, the resins break or rupture. In contrast to the behavior of these high pressure, low density polyethylene resins, low pressure, low density ethylene hydrocarbon copolymer resins can be drawn down considerably without reaching stresses to cause melt breakage. On the other hand, by not building up significant stresses with drawing, it is believed that a low pressure, low density polyethylene melt becomes more susceptible to edge waver.

Linear, Low Density Ethylene Hydrocarbon Copolymers

Suitable linear, low density ethylene hydrocarbon copolymers for the slot-cast compositions of the present invention are those copolymers of ethylene and one or more $C_3$ to $C_8$ alpha olefins having a density of about equal to or greater than 0.87 to equal to or less than 0.940 and preferably of about equal to or greater than 0.916 to equal to or less than 0.928. These copolymers can be made in a solution, slurry or gas phase process well known to those skilled in the art.

Also, suitable linear, low density ethylene hydrocarbon copolymers of this invention are those having a major mole percent of equal to or greater than 80 of ethylene and a minor mole percent (of equal to or less than 20) of one or more $C_3$ to $C_8$ alpha olefins. The $C_3$ to $C_8$ alpha olefins include propylene, butene-1, pentene-1, heptene-1, 4-methyl pentene-1, hexene-1, and octene-1.

Linear, low density ethylene hydrocarbon copolymers of the present invention normally have a

D-13968

- 10 -

standard melt index of equal to or greater than 0.1, preferably equal to or greater than 1.0 and most preferably equal to or greater than 2.0. Also, copolymers of this invention should have a standard melt index of equal to or less than 100, preferably equal to or less than 50, and most preferably equal to or less than 20.

Preferred linear, low density ethylene hydrocarbon copolymers for use in the extrusion coating compositions of the present invention are those possessing a molecular weight distribution, $M_w/M_n$, of equal to or greater than 2.4 to equal to or less than 5.0 and preferably of about equal to or greater than 2.8 to equal to or less than 3.4. These copolymers have a melt flow ratio of about equal to or greater than 20 to equal to or less than 37 and preferably, equal to or greater than 25 to equal to or less than 32. The melt flow ratio of equal to or greater than 20 to equal to or less than 32 thus corresponds to a $M_w/M_n$ value range of about 2.4 to 3.3 and the melt flow ratio range of equal to or greater than 25 to equal to or less than 37 corresponds to a $M_w/M_n$ range of about 2.8 to 3.6.

The melt flow ratio equals the Flow Rate (ASTM 1238, Condition F) divided by the Melt Index (ASTM D1238 Condition E).

These ethylene hydrocarbon copolymers also have a total unsaturation content of about equal to or greater than 0.1 to equal to or less than 0.3 C=C per 1000 carbon atoms and preferably of about equal to or greater than 0.14 to equal to or less than 0.24 C=C per 1000 carbon atoms.

D-13968

Preferred linear, low density ethylene copolymers for use in the present invention include those which may be produced in accordance with the procedures set forth in U.S. Patent 4,302,566 in the names of F. J. Karol et al. and entitled "Preparation of Ethylene Copolymers in Fluid Bed Reactor", and the procedures set forth in U.S. Patent 4,302,565 in the names of G. L. Goeke et al. and entitled "Impregnated Polymerization Catalyst, Process for Preparing, and Use for Ethylene Copolymerization" as well as procedures which will produce ethylene hydrocarbon copolymers with properties as heretofore described.

Other linear, low density ethylene hydrocarbon copolymers preferred for use in the present invention are those which can be prepared as described in U.S. Patent 4,011,382, entitled "Preparation of Low and Medium Density Ethylene Polymer in Fluid Bed Reactor" by I. J. Levine et al., the disclosure of which is incorporated herein by reference.

Slot Cast Conditions

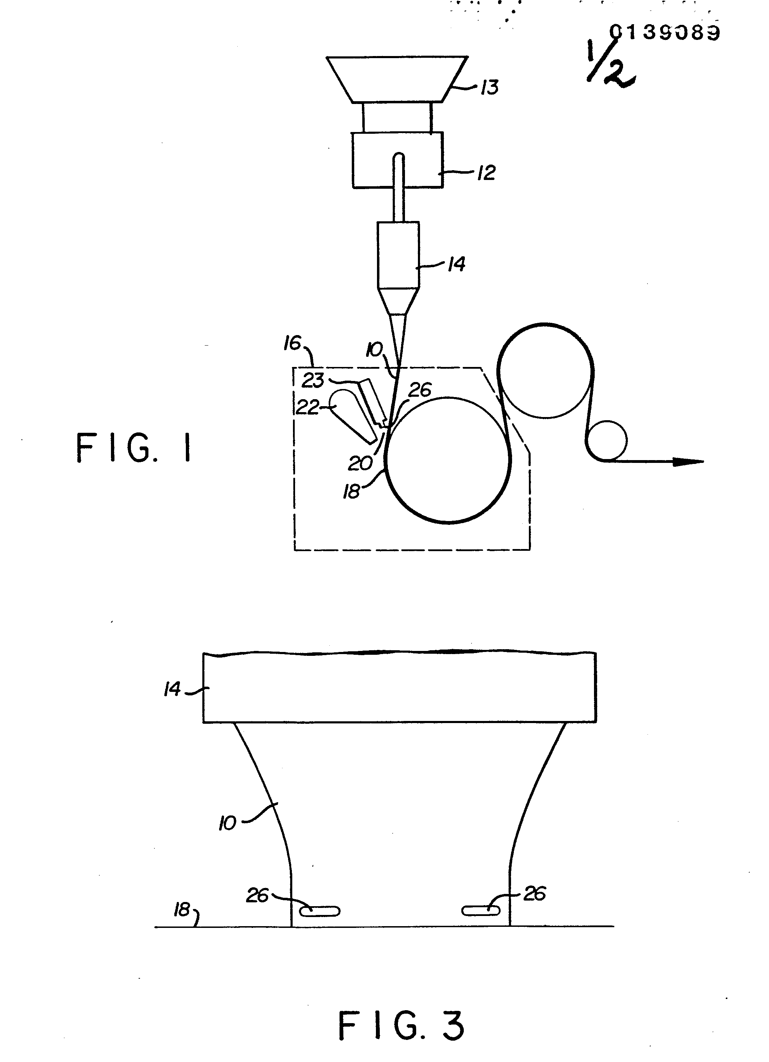

In a typical conventional basic slot cast operation such as shown in Fig. 1, the LLDPE is fed into an extruder hopper. By gravity feed, the LLDPE goes into a polyethylene screw (not shown) in an extruder. The polymer enters the feed section as a solid and is conveyed, compressed and begins melting in the transition section of the screw extruder. It then proceeds with the melting and pumping into a so-called metering section of the screw, at which point temperature also increases, possibly assisted by heat transfer to the melt on the barrel side. The melt then flows through the extruder, optionally past a mixing head (not shown) to eliminate any unmelted material and to homogenize the melted material, optionally also followed by another metering section which will increase the pumping to a pressure necessary to extrude through the die. The melt is more or less homogenous in temperature and uniformity as it passes through and out of the die forming a molten film. This web then is drawn down onto the casting rolls and forced against the casting roll by an air knife. The air knife forces the molten film onto the casting roll, thus duplicating the surface pattern of the casting roll. The web is cooled by the casting roll and drawn off onto other take-up rolls. It then proceeds through various treatment stations to a wind-up system where the cast film can then be wound up.

In the extruder, the resin is subjected to temperatures ranging from about 10°C. above ambient up to 316°C. The extrudate emerges at temperatures from 135°C to 316°C, preferably from 191°C to 304°C, under varying conditions of head pressure. Average residence times in the extruder can vary from about 0.5 to 15 minutes. The cast film is usually formed in a uniform thickness of from about 0.5 to 5.0 mils thick.

High Pressure, Low Density Polyethylene

High pressure, low density polyethylene refers to polyethylene that has a density up to about 0.93 and preferably, from about 0.91 to 0.92

grams/$cm^3$. The high pressure, low density polyethylene is made commercially by the well-known high pressure process, utilizing free radical initiators. In such process, ethylene is homopolymerized with free radical catalysts under pressures greater than 15,000 psi and up to 50,000 psi at temperatures up to 300°C in tubular or stirred reactors in the absence of solvents. Also useful, and within the scope of the present invention are copolymers of ethylene with a vinyl monomer (e.g., vinyl acetate; alpha-alkyl acrylic acid esters such as ethyl ethyl acrylate; and other alpha olefins in minor concentration providing copolymers having a density between about 0.91 to about 0.93 gram/$cm^3$.

The composition of this invention includes from about 3 to about 12, preferably from about 4 to about 9 weight percent of the high pressure, low density polyethylene.

Fluid Medium and Edge Pinner

A variety of fluid mediums can be employed according to the present invention such as nitrogen, carbon dioxide, atomized water spray, or air. Air is the preferred fluid medium. The air can be directed against the edges of the moving molten film by a variety of techniques. It is preferred, however, that the air be delivered against the edges of the moving molten film from an edge pinner nozzle. The edge pinner is simply a high velocity jet of air directed on the edge of the molten web. The air jet must have enough velocity to force intimate contact between the web edge and the casting roll. The optimum configuration for the edge pinner nozzle has been found to be approximately 0.04 inches in height by 0.125 to 0.5 inches in width. The jet should be easily adjustable across the web, and for the impingement angle. Edge pinners can be fabricated from 1/8 to 3/8 inch soft copper tubing by flattening the ends of the tubing. The edge pinner angle should be somewhat less than the air knife angle. A normal range for the edge pinner angle would be about 45° to 70° to the molten web. The edge pinner should be positioned laterally in from the edge about 1/16 to 3/16 inch of the edge of the molten web. The edge pinner is typically spaced about 1/8 to about 1 inch from the molten web.

Reference is now made to the drawing and particularly Fig. 1 which schematically illustrates the process of the invention.

Specifically a molten web or film 10 is shown being extruded from Extruder 12 fed from Hopper 13, through a die 14 in a substantially vertically downward direction where it is directed into a rapid cooling zone or station 16 containing a casting roll 18, an air knife 22, and edge pinners 23. As will be recognized by those skilled in the art, the molten film can also be extruded in other directions, e.g., horizontal. Details of the upstream apparatus are not given (e.g., the extruder, die, etc.) since conventional process and apparatus may be employed to melt and advance the polymer material to form the molten film or web, such conventional apparatus and process being determined by the resin used and by the end use requirements of the molten film. Similarly, details of the downstream apparatus (e.g., the cooling means and take-up of the film) are also dependent on the end use requirements as stated above.

In a broad concept, therefore, two items are required i.e., extrusion die 14 and a rapid cooling zone or station 16 containing casting roll 18 and edge pinners 23 and the conditions of operation are such that polymeric materials which are susceptible to edge waver will edge waver at the speeds encountered. Provision for reducing the incidence of edge waver is provided in part by directing a fluid medium or stream against the edges of the moving molten film through edge pinners 23 at a point between die 14 and casting roll 18, preferably immediately above air knife 22. Thus and referring again to Fig. 1, there is provided edge pinners 23 which is shown as being positioned immediately above air knife 22.

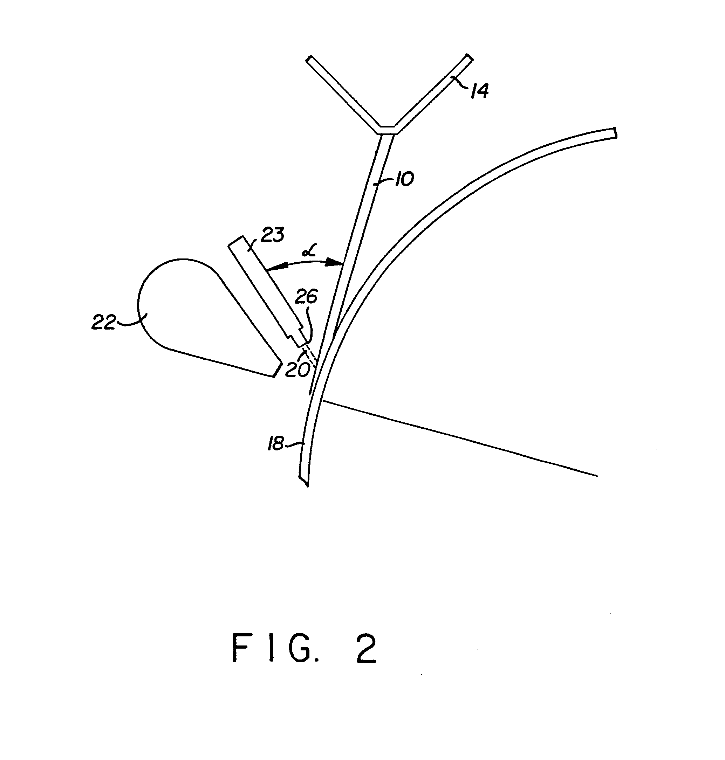

The edge pinner 23 is designed so as to emit a stream of air 20 against the edges of the moving molten film. It will be seen that two edge pinners are provided disposed on each side of the moving film adjacent thereto as shown in Fig. 2. Thus referring to Fig. 2 the stream of air is provided by discharging pressurized air from outlet 26 which is positioned adjacent the moving film 10 and which is provided with outlet 26 through which the air passes. The outlet can be slit shaped, circular, oval, etc. The edge pinners can be about 1/4 inch in width but can be lesser or greater, the main point being that it be capable of directing the fluid stream at the required velocities and amounts. Air can be supplied to the edge pinners by conventional techniques utilizing conventional equipment.

The distance from the molten polymeric film to the edge pinners is a function of the process conditions and typically can be in a range of from about 1/8 to 1 inch and preferably 1/4 to 1/2 inch. The air can contact the moving film either perpendicularly or at angles to the film, preferably at an angle α of about 45° to 75° as measured from the surface of the web.

In the following examples employing edge pinners, the edge pinner location is illustrated in Figure 2. Air pressures of about 1-20 psi, preferably 5-15 psi are usually employed.

## Example 1

This Example demonstrates the maximum line speeds attainable in a slot cast extrusion process before the onset of edge waver. The results are compared with a conventional procedure without the utilization of high pressure low density polyethylene (HP-LDPE) addition.

The resin employed was GRSN-7042 which is a 2.0 melt index, 0.918 g/cc density low pressure polymerized ethylene copolymer of ethylene and butene-1 and which is commercially available from Union Carbide Corp. The high pressure low density polyethylene resin (2.4 melt index, 0.918 g/cc density) is also commercially available from Union Carbide Corp. under the designation DYNH.

The extruder utilized was a 2 1/2 inch diameter Egan extruder, having a barrel length to diameter of 28:1 and a 28:1 length to diameter (L/D) ratio polyethylene screw.

The extruder had a 75 horsepower dynamatic drive and 5 barrel heating zones. The die utilized was a 48 inch wide Black Clawson die deckled to a 30 inch width. Internal deckling rods (3/16 inch diameter) were employed on the die ends to reduce edge bead.

The casting unit (see Figure 1) consisted of a 24 inch diameter chrome-plated casting roll, a 30 inch wide air knife, and a 12 inch diameter chrome-plate secondary casting roll. The casting roll temperature was about 21°C and was maintained by a water flow in the rolls of 150 gallons/min. The balance of the take-off and wind-up equipment were part of an Egan slot cast unit.

The results and other operating conditions are indicated in Table I below:

## Table I

### EFFECT OF HP-LDPE (DYNH) ON GRSN-7042 LINE SPEED

#### (Edge pinners employed in all runs)

| Wt % HP-LDPE (DYNH) | O | 5 | 7 | 15 |
|---|---|---|---|---|
| Draw Span, in. | 5 | 5 | 5 | 5 |
| Extruder Speed, RPM | 175 | 175 | 175 | 175 |
| Melt Temperature, °C | 294 | 296 | 293 | 291 |
| Head Pressure, psi | 3000 | 2900 | 2800 | 2600 |
| Rate, lbs/hr | 320 | 315 | 310 | 300 |
| Maximum Line Speed Without Edge Waver, ft/min | 450 | 600 | 700 | 800 |
| Film Thickness, mils | 1.2 | 0.9 | 0.8 | 0.7 |

D-13968

As shown in Table 1, the maximum line speed attainable with only GRSN-7042 was 450 ft/min. Attempts to run at higher speeds were limited by edge waver. At 450 ft/min. the film thickness was 1.2 mils. Adding 5 percent high pressure low density polyethylene (DYNH) resulted in a significant increase in speed to 600 ft/min and a corresponding reduction in thickness to 0.9 mils. At 7% DYNH, the speed increased to 700 ft/min, an increase of 75 percent over GRSN-7042 with additive. At this high speed, the film gauge was 0.8 mils, suitable for many commercial slot cast applications.

The addition of higher percentages of high pressure low density polyethylene although showing better results is not desirable because of higher raw material costs and in addition, the final product does not have the inherent property advantages achieved by using maximum percentages of LLDPE.

## Example II

This Example is similar to Example I and demonstrates the maximum line speed attainable in a slot cast extrusion process before the onset of edge waver. The results are compared with a short draw span of 5 inches and a long draw span of 10 inches.

The resin employed was GRSN-7042 which is a 2.0 melt index, 0.918 g/cc density low pressure polymerized ethylene copolymer of ethylene and butene and which is commercially available from

D-13968

Union Carbide Corp. The resin contained 7 weight percent DYNH which is also commercially available from Union Carbide Corp.

The extruder, die, and casting unit was the same as in Example I. The results and other operating conditions are shown in Table II below:

### Table II
### EFFECT OF DRAW SPAN ON GRSN-7042 LINE SPEED
(Edge pinners employed in roth runs)

| Draw Span, inches | 5 | 10 |
|---|---|---|
| Extruder Speed, RPM | 175 | 175 |
| Melt Temperature, °C | 279 | 279 |
| Head Pressure, psi | 2800 | 2800 |
| Rate, lbs/hr | 310 | 310 |
| Maximum Line Speed Without Edge Waver, ft/min | 700 | 300 |
| Film Thickness, mils | 0.8 | 1.5 |

As shown in Table II, speeds up to 700 ft/min were achieved with GRSN-7042 by using a 5 inch draw span. As the draw span was increased to 10 inches, the maximum speed before the onset of edge waver was only 300 ft/min. The film thicknesses at these speeds were 0.8 and 1.5 mils, respectively.

### Example III

This Example is similar to Example I and demonstrates the maximum line speed attainable in a slot cast extrusion process before the onset of edge

D-13968

waver. The results are compared with and without edge pinners being employed.

The resin employed was GRSN-7042 which is a 2.0 melt index, 0.918 g/cc density low pressure polymerized ethylene copolymer of ethylene and butene and which is commercially available from Union Carbide Corp. The resin contained 7 weight percent DYNH which is also commercially available from Union Carbide Corp.

The extruder, die, and casting unit was the same as in Example I. The results and other operating conditions are shown in Table III below:

### Table III
#### EFFECT OF EDGE PINNERS ON GRSN-7042 LINE SPEED

| Edge Pinner | Yes | No |
|---|---|---|
| Air Pressure for edge pinners, psi | 15 | -- |
| Draw Span, in. | 5 | 5 |
| Extruder Speed, RPM | 175 | 175 |
| Melt Temperature, °C | 279 | 279 |
| Head Pressure, psi | 2800 | 2800 |
| Rate, lbs/hr | 310 | 310 |
| Maximum Line Speed Without Edge Waver, ft/min. | 700 | 250 |
| Film Thickness | 0.8 | 2.2 |

As can be seen from Table III, the maximum line speed achieved with edge pinners employed was 700 ft/min. The edge pinner consisted of a 0.125 inch wide by 0.04 inch inside dimension tubing (see Figure 2). The edge pinner angle was 60° and it was located 1/8 inch laterally inboard from the edge of the web. The distance from the edge pinner to the molten web was 1/4 inch and an air pressure of 15 psi was employed to force intimate contact between the web edge and the casting roll. When the edge pinners were removed, the maximum line speed possible before edge waver was only 250 ft/min, a reduction of approximately 65%.

D-13968

CLAIMS:

1. A process for reducing edge waver during slot cast extrusion of a molten film formed from a linear low density polyethylene film forming composition, said molten film being susceptible to edge waver under conditions which would cause edge waver by extruding the molten from a die and rapidly cooling said molten film in a rapid cooling zone, which comprises (a) incorporating in said linear low density polyethylene film forming composition from about 3 to 12% by weight of high pressure low density polyethylene; (b) extruding said film from said die and said rapid cooling zone at a draw span of about three to eight inches; and (c) directing a fluid medium against the edges of said molten film between said die and said rapid cooling zone at a velocity and in an amount sufficient to reduce edge waver in said molten film.

2. A process according to claim 1 wherein said high pressure low density polyethylene is incorporated in said LLDPE film forming composition in an amount of from about 4% to about 9% by weight.

3. A process according to claim 2 wherein said high pressure low density polyethylene is incorporated in said LLDPE film forming composition in an amount of from about 5% to about 7%.

4. A process according to any of claims 1-3 wherein the draw span is from about 5 to about 7 inches.

D-13968 .

5. A process according to any of claims 1-4 wherein said fluid medium is directed against said edges of said molten film at an angle of from about 45° to about 70° as measured to the molten web.

6. A process according to any of claims 1-5 wherein said fluid medium is air.

7. A process according to any of claims 1-6 wherein said fluid medium is directed against said edges from a distance from about 1/16 to 3/16 inch from edge of said web.

8. A process according to any of claims 1-7 wherein said LLDPE is a linear low density ethylene hydrocarbon copolymer.

9. A process according to claim 8 wherein said copolymer is a copolymer of greater than or equal to 80 mol percent of ethylene and less than or equal to 20 mol percent of at least one $C_3$ to $C_8$ alpha olefin.

10. A process according to claim 9 wherein said copolymer has a melt index of greater than or equal to 0.1.

F I G. I

F I G. 3

FIG. 2